# EUROPEAN PATENT APPLICATION

(11) **EP 3 203 446 A1**
(43) Date of publication of application: **09.08.2017**
(21) Application number: 17150735.3
(22) Date of filing: 09.01.2017
(51) Int. Cl.: G07C 5/08, G07C 5/00, G07C 5/12, G08G 5/00

(54) **EVALUATION OF PILOT PERFORMANCE USING COLLECTED AVIONICS SYSTEM DATA**

(30) Priority: 21.01.2016 US 201615003377
(71) Applicant: Honeywell International Inc., Morris Plains, NJ 07950 (US)
(72) Inventor: HAMBLIN, Christopher, Morris Plains, NJ 07950 (US); FOSLIEN, Wendy, Morris Plains, NJ 07950 (US); GARG, Chaya, Morris Plains, NJ 07950 (US); GRIMM, Andrew, Morris Plains, NJ 07950 (US); ROGERS, William, Morris Plains, NJ 07950 (US); MUKTEVI, Srini, Morris Plains, NJ 07950 (US); BAZAWADA, Suresh, Morris Plains, NJ 07950 (US)
(74) Representative: Houghton, Mark Phillip

(57) **Abstract**

A method of evaluating pilot performance receives and processes avionics data at a database system. The database system computes component scores for the pilot based on the avionics data. Each component score represents a performance grade for a pilot-controlled operation of the aircraft. The database system saves the component scores in association with a pilot performance record for the pilot, and calculates an overall score based on the component scores. The overall score represents a flight performance grade for the pilot. The database system saves the overall score in association with the pilot performance record, and generates a report derived from the component scores and the overall score. A graphical representation of the report is communicated to an electronic device.

## Description

### TECHNICAL FIELD

Embodiments of the subject matter described herein relate generally to avionic systems. More particularly, embodiments of the subject matter relate to systems and methods for evaluating pilot performance based on the analysis of avionics system data collected during flight operations.

### BACKGROUND

Modern aircraft include various avionics systems and subsystems that are utilized to control flight maneuvers, perform diagnostic tests, handle incoming and outgoing communication, generate alerts and messages, and the like. Any given avionics system or subsystem can generate and/or process data ("avionics system data") during operation of the host aircraft. In some situations, avionics system data generated by one component or module onboard the aircraft can be shared or otherwise utilized by another component or module onboard the same aircraft. Moreover, avionics system data can be collected and stored for purposes of running diagnostic checks, maintenance routines, or the like.

Many of the avionics systems onboard an aircraft are designed to respond to pilot commands, instructions, and input. For example, a flight controls subsystem responds to the pilot's manipulation of flight deck control devices. As another example, a navigation subsystem responds to the geographical position of the aircraft, which in turn is influenced by flight maneuvers initiated by the pilot. Consequently, at least some of the avionics system data generated by a host aircraft will be directly or indirectly influenced by pilot activities.

Accordingly, it is desirable to take advantage of the avionics system data that is generated by a host aircraft during operation. Furthermore, other desirable features and characteristics will become apparent from the subsequent detailed description and the appended claims, taken in conjunction with the accompanying drawings and the foregoing technical field and background.

### BRIEF SUMMARY

A method of evaluating pilot performance is presented here. An exemplary embodiment of the method receives avionics data at a database system. The avionics data is generated by a plurality of avionics systems onboard an aircraft during operation of the aircraft by a pilot. The database system computes a plurality of component scores for the pilot based on the received avionics data. Each of the plurality of component scores represents a performance grade for a pilot-controlled operation of the aircraft. The database system saves the plurality of component scores in association with a pilot performance record for the pilot, and calculates an overall score based on the plurality of component scores. The overall score represents a flight performance grade for the pilot. The database system saves the overall score in association with the pilot performance record for the pilot, and generates a report derived from the plurality of component scores and the overall score. A graphical representation of the report is communicated to an electronic device.

A computer-implemented system is also presented here. An exemplary embodiment of the system includes a processor architecture having at least one processor device, a data storage apparatus, and a tangible computer readable media element having non-transitory processor-executable instructions stored thereon and configurable to cause the processor architecture to perform a method of evaluating pilot performance. The method receives avionics data generated by a plurality of avionics systems onboard an aircraft during operation of the aircraft by a pilot, computes a plurality of component scores for the pilot based on the received avionics data, each of the plurality of component scores representing a performance grade for a pilot-controlled operation of the aircraft, and saves, in the data storage apparatus, the plurality of component scores in association with a pilot performance record for the pilot. The method continues by calculating an overall score based on the plurality of component scores, the overall score representing a flight performance grade for the pilot. The overall score is saved in the data storage apparatus in association with the pilot performance record for the pilot. The method continues by generating, in response to a user request, a report derived from the plurality of component scores and the overall score, and communicating a graphical representation of the report to an electronic device.

Another method of evaluating pilot performance is presented here. An exemplary embodiment of the method evaluates multiple flights by computing, by a database system, a plurality of component scores based on avionics data collected during operation of an aircraft during the flight to be evaluated, each of the plurality of component scores representing a performance grade for a pilot-controlled operation of the aircraft. The plurality of component scores are saved in association with a pilot performance record for a pilot of the flight to be evaluated. An overall score is calculated based on the plurality of component scores, the overall score representing a flight performance grade for the pilot of the flight to be evaluated. The database system saves the overall score in association with the pilot performance record for the pilot of the flight to be evaluated. The method continues by receiving a request for a stored pilot performance record maintained by the database system. The database system responds to the request by generating a report that includes component scores or overall scores from the stored pilot performance record. A graphical representation of the report is communicated to an electronic device.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a block diagram of a pilot performance evaluation system arranged in accordance with an exemplary embodiment of the invention;
FIG. 2 is a block diagram of an exemplary embodiment of an avionics network onboard an aircraft;
FIG. 3 is a block diagram of an exemplary embodiment of a hardware platform suitable for use in the pilot performance evaluation system shown in FIG. 1;
FIG. 4 is a flow chart that illustrates an exemplary embodiment of a method of collecting avionics data;
FIG. 5 is a flow chart that illustrates an exemplary embodiment of a method of evaluating pilot performance; and
FIG. 6 is a flow chart that illustrates an exemplary embodiment of a method of reporting pilot performance scores.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software, firmware, or the like, various elements of the systems described herein are essentially the code segments or instructions that perform the various tasks. In certain embodiments, the program or code segments are stored in a tangible processor-readable medium, which may include any medium that can store or transfer information. Examples of a non-transitory and processor-readable medium include an electronic circuit, a semiconductor memory device, a ROM, a flash memory, an erasable ROM (EROM), a floppy diskette, a CD-ROM, an optical disk, a hard disk, or the like.

Various embodiments are directed to methods and systems for evaluating, grading, or scoring pilots based on the analysis of avionics system data that is collected during operation of aircraft. During the operation of an aircraft (e.g., during each flight), avionics data is collected from avionics systems onboard the aircraft. The collected avionics data is communicated to a database system after completion of the flight. The database system can be implemented as a cloud-based system, or in an alternative manner. The database system applies certain data analytics processes to the avionics data to model pilot behaviors and to otherwise generate scores or grades that are indicative of pilot performance for the flight. In certain embodiments, a number of individual component scores are calculated, wherein each component score represents a performance grade for a given task, operation, or pilot maneuver. In addition, an overall score or grade is computed from the component scores; the overall score represents a general performance grade for the particular flight.

A centralized processing and database system can store and maintain pilot performance scores and records for any number of registered pilots, and for any number of flights. Thus, the processing and database system can arrange, organize, and process the pilot performance scores as needed for purposes of generating reports, charts, and the like. The pilot performance scores can be provided to users (pilots, airline management, regulatory agencies, etc.) in an easy to read and understand graphical format. For example, the pilot performance scores can be delivered in a mobile application, in a website, or the like. The reporting function allows users to view and analyze their own performance scores and the performance scores of their peers.

The information collected and processed by the database system can be homogenized or otherwise stripped of identifying information, such that the pilots are not actually identified. Anonymous pilot performance data can be provided to any number of consumers, such as, without limitation: airline operators; avionics equipment manufacturers; insurance companies; airports; maintenance companies; and pilot organizations interested in learning more about their membership, their behaviors, and demographics. The pilot performance data and scores can be formatted for analysis by any number of variables to identify certain user behaviors, user stereotypes, performance characteristics, and the like.

Pilot performance scores can also be utilized in one or more social networking or "game" applications. For example, pilot scores can be used to rank the pilots of a fleet, to rank airlines, or the like. The individual component scores can be used to rank the pilots in accordance with different criteria or to focus on different attributes such as: safety; fuel efficiency; timeliness; productivity; and the like. Pilots can be grouped by employer, aircraft type, operation type, etc. Pilots can be ranked by overall performance as well as local performance for specific locations (cities, airports, etc.) or routes. If the pilot scoring methodology is tied to a social networking application, then a pilot can find other pilots that share certain characteristics with them, connect with them socially, comment on the performance of other pilots, give accolades and encouragement, and issue personal "improvement" challenges.

It should be appreciated that the system described here can be utilized to evaluate pilot performance in the context of any type of aircraft, such as a helicopter, airplane, or lighter-than-air vehicle. Moreover, exemplary embodiments of the system may also be utilized in spacecraft, watercraft, submarines, and other types of vehicles, in addition to machine operation. For simplicity, the non-limiting embodiments are described below with reference to aircraft.

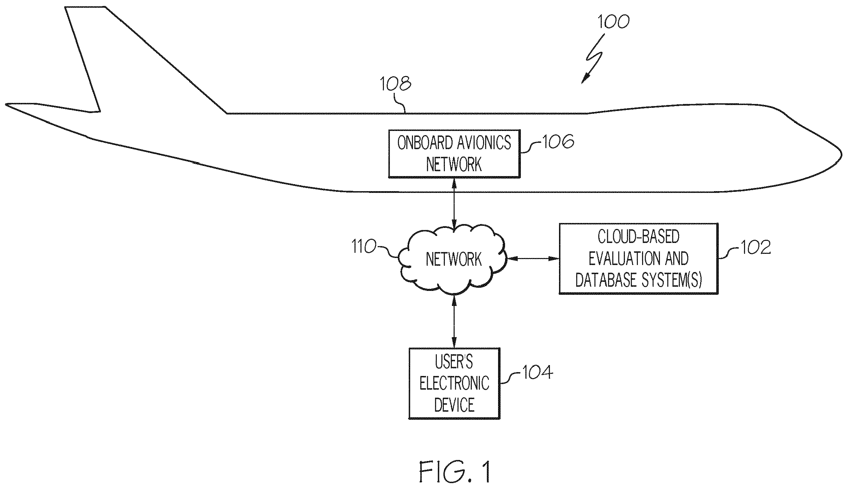

FIG. 1 is a block diagram of a pilot performance evaluation system 100 arranged in accordance with an exemplary embodiment. The techniques and methodologies described with reference to the exemplary system 100 can also be implemented in the context of other system architectures and environments. The system 100 illustrated in FIG. 1 generally includes, without limitation: a centralized evaluation and database system 102; a user's electronic device 104; and an avionics network 106 onboard a host aircraft 108. The devices, components, and equipment supported by the system 100 can communicate with one another as needed via a data communication network 110.

In practice, the database system 102 can support and communicate with any number of end user devices (for simplicity, only one electronic device 104 is shown and described here). Moreover, the database system 102 can support and communicate with any number of avionics networks and with any number of aircraft. Indeed, the pilot performance evaluation system 100 is designed to collect and analyze avionics data generated by the avionics systems onboard a plurality of different aircraft operated by different pilots. For example, the database system 102 can be deployed and maintained by an airline company to monitor and evaluate the performance of the pilots that fly aircraft in its fleet.

The electronic device 104 may be implemented using any suitable hardware platform. In this regard, the electronic device 104 can be realized in any common form factor including, without limitation: a desktop computer; a mobile computer (e.g., a tablet computer, a laptop computer, or a netbook computer); a smartphone; a video game device; a digital media player; a piece of home entertainment equipment; a digital camera or video camera; or the like. The electronic device 104 is realized as a computer-implemented or computer-based device having the hardware, software, firmware, and/or processing logic needed to carry out the various client side techniques and methodologies described in more detail herein. Similarly, the database system 102 can be implemented as a computer or processor based component having the hardware, software, firmware, and/or processing logic needed to carry out the various centralized server side techniques and methodologies described in more detail herein.

The database system 102 can be deployed in certain embodiments of the system 100 to analyze and process the avionics data generated by the avionics systems and subsystems onboard the host aircraft 108 (e.g., the systems and subsystems that together form the avionics network 106). In such embodiments, the database system 102 includes the functionality to receive, process, and analyze the avionics data for purposes of evaluating pilot performance. The database system 102 can also be suitably configured to deliver pilot performance scores, grades, and/or performance reports to the end users of the system 100.

In practice, the database system 102 may be realized as a computer-implemented or computer-based system having the hardware, software, firmware, and/or processing logic needed to carry out the various data analytics, scoring, and reporting processes, techniques, and methodologies described in more detail herein. It should be appreciated that the database system 102 need not be deployed in embodiments where a component of the avionics network 106 and/or the electronic device 104 performs the desired functionality. In other words, the methodology described herein could be implemented at the local client device level without relying on any centralized processing at the server level. Moreover, in certain embodiments the desired functionality could be executed or performed in a distributed manner across the database system 102 and one or more other devices or processing modules resident in the system 100.

The data communication network 110 provides and supports data connectivity between the various components of the system 100. In practice, the data communication network 110 may be any digital or other communications network capable of transmitting messages or data between devices, systems, or components. In certain embodiments, the data communication network 110 includes a packet switched network that facilitates packet-based data communication, addressing, and data routing. The packet switched network could be, for example, a wide area network, the Internet, or the like. In various embodiments, the data communication network 110 includes any number of public or private data connections, links or network connections supporting any number of communications protocols. The data communication network 110 may include the Internet, for example, or any other network based upon TCP/IP or other conventional protocols. In various embodiments, the data communication network 110 could also incorporate a wireless and/or wired telephone network, such as a cellular communications network for communicating with mobile phones, personal digital assistants, and/or the like. The data communication network 110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol.

In accordance with one contemplated use case, the avionics systems of the avionics network 106 generate avionics data during operation of the host aircraft 108. In this regard, "operation" of the host aircraft 108 can include any state where at least one avionics system is active, regardless of the flight status of the host aircraft 108. For example, some avionics systems onboard the host aircraft can be actively generating avionics data even though the host aircraft 108 is stationary. At an appropriate time (e.g., after completion of a flight) the avionics data collected during the flight is uploaded to the database system 102 via the data communication network 110. Thereafter, the database system 102 can analyze and process the avionics data to obtain pilot performance scores. The pilot performance information for that particular flight and/or for other flights can be communicated to the electronic device 104 (via the data communication network 110) on demand. It should be understood that FIG. 1 depicts various communication links as double-ended arrows. These links need not be persistent, and they need not be active concurrently as suggested by FIG. 1. The links are illustrated for ease of description and to demonstrate how the centralized database system 102 is able to receive avionics data from the host aircraft 108, and how the database system 102 is able to communicate pilot performance information to the electronic device 104.

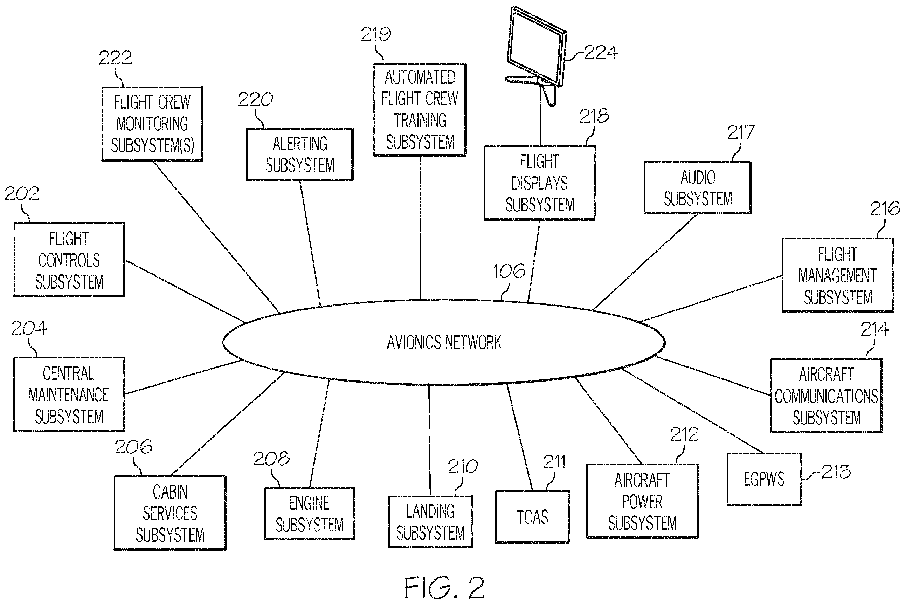

FIG. 2 is a block diagram of an exemplary embodiment of the avionics network 106 shown in FIG. 1. As explained above, the avionics network 106 includes various avionics systems or subsystems that cooperate to support the operation of the host aircraft 108. The avionics network 106 can utilize or be implemented with an Avionics Standard Communication Bus (ASCB), as is well understood. The illustrated embodiment of the avionics network 106 includes, without limitation: a flight controls subsystem 202; a central maintenance subsystem 204; a cabin services subsystem 206; an engine subsystem 208; a landing subsystem 210; a traffic alert and collision avoidance system (TCAS) 211; an aircraft power subsystem 212; an enhanced ground proximity warning system (EGPWS) 213; an aircraft communications subsystem 214; a flight management subsystem 216; an audio subsystem 217; a flight displays subsystem 218; an automated flight crew training subsystem 219; a flight crew alerting subsystem 220; and at least one flight crew monitoring subsystem 222. The flight displays subsystem 218 includes or cooperates with at least one display element 224. In practice, the avionics network 106 could be implemented with some redundancy. For example, the avionics network 106 might include redundant, independent, and parallel instantiations of one or more subsystems, e.g., the flight displays subsystem 218, the alerting subsystem 220, the flight controls subsystem 202, or the like. Moreover, the particular subsystems used by an aircraft need not be identical to those depicted in FIG. 2. Indeed, the number, type, and functionality of the onboard avionics systems may vary from one airframe to another and from one aircraft to another, and the avionics systems shown in FIG. 2 are not intended to limit or restrict the scope of the subject matter described here.

The avionics systems and the avionics network 106 need not be customized or modified to support the pilot evaluation and scoring approaches described here. Accordingly, the various systems and subsystems shown in FIG. 2 will not be described in detail here. That said, this description assumes that the avionics systems that form the avionics network 106 are capable of independently generating respective avionics data, which is communicated on the avionics network 106 communication bus. At least some of the avionics data that is analyzed and processed by the system 100 includes data that is generated in response to pilot (and/or other members of the flight crew) interaction with at least one of the avionics systems onboard the host aircraft 108. Any given avionics system is suitably configured to generate and communicate avionics data that relates to its status, operation, condition, functionality, operating state, etc. In practice, the avionics data generated during operation of the host aircraft 108 can be saved in a conventional manner for uploading to the database system 102 at an appropriate time. The avionics data that is analyzed and processed by a particular implementation of the database system 102 can vary, depending on a number of factors, parameters, and variables. For example, some or all of the following can influence the specific type of avionics data that will be used to derive pilot performance scores: the particular type of performance scoring methodology used by the system 100; the design, configuration, or airframe of the host aircraft 108; the performance grading criteria; and settings or preferences set by the entity that hosts or maintains the system 100.

The avionics data that is processed and analyzed by a particular embodiment of the system 100 can include data generated by any of the avionics systems onboard the host aircraft 108. Accordingly, the avionics data of interest can include any of the following, without limitation: global positioning system data, aircraft speed data, aircraft elevation data, aircraft altitude data, time data, fuel consumption data, aircraft acceleration data, aircraft deceleration data, gravitational loading data, aircraft route data, airport identifier data, runway identifier data, aircraft glide slope deviation data, aircraft lateral deviation data, aircraft vertical deviation data, wind speed data, approach type data, aircraft heading data, aircraft pitch angle data, aircraft braking force data, aircraft pitch rate data, aircraft roll rate data, aircraft yaw rate data, or autopilot mode data. This data can be generated or created by any of the avionics systems and subsystems depicted in FIG. 2 and/or by other components onboard the host aircraft 108.

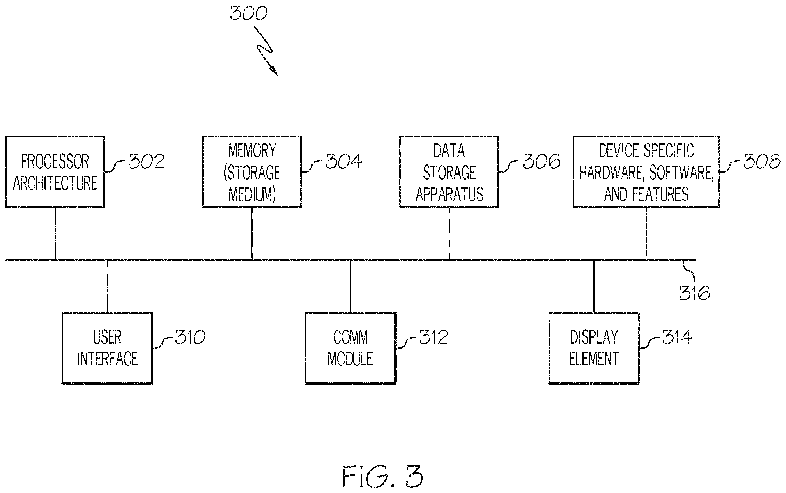

FIG. 3 is a block diagram of an exemplary embodiment of a hardware platform 300 suitable for use in the pilot performance evaluation system 100. The hardware platform is implemented as a processor-based or computer-based device, system, or component that is designed, configured, and programmed to meet the needs of the system 100. To this end, the hardware platform 300 can be utilized to implement and realize the database system 102, the electronic device 104, and one or more of the avionics systems if so desired.

The illustrated embodiment of the hardware platform 300 includes, without limitation: a processor architecture 302 having at least one processor device; a suitable amount of memory 304, which includes at least one computer/processor readable media element; a data storage apparatus 306; device-specific hardware, software, firmware, and/or features 308; a user interface 310; a communication module 312; and a display element 314. Of course, the hardware platform 300 may include additional elements, components, modules, and functionality configured to support various features that are unrelated to the subject matter described here. For example, the hardware platform 300 may include certain features and elements to support conventional functions that might be related to the particular implementation and deployment of the hardware platform 300. In practice, the elements of the hardware platform 300 may be coupled together via a bus or any suitable interconnection architecture 318.

The processor architecture 302 may be implemented or performed with a general purpose processor, a content addressable memory, a digital signal processor, an application specific integrated circuit, a field programmable gate array, any suitable programmable logic device, discrete gate or transistor logic, discrete hardware components, or any combination designed to perform the functions described here. Moreover, the processor architecture 302 may be implemented as a combination of computing devices, e.g., a combination of a digital signal processor and a microprocessor, a plurality of microprocessors, one or more microprocessors in conjunction with a digital signal processor core, or any other such configuration.

The memory 304 may be realized as RAM memory, flash memory, EPROM memory, EEPROM memory, registers, a hard disk, a removable disk, a CD-ROM, or any other form of storage medium known in the art. In this regard, the memory 304 can be coupled to the processor architecture 302 such that the processor architecture 302 can read information from, and write information to, the memory 304. In the alternative, the memory 304 may be integral to the processor architecture 302. As an example, the processor architecture 302 and the memory 304 may reside in an ASIC. At least a portion of the memory 304 can be realized as a computer storage medium, e.g., a tangible computer readable media element having non-transitory processor-executable instructions stored thereon. The computer-executable instructions can be configurable such that, when read and executed by the processor architecture 302, cause the hardware platform 300 to perform certain tasks, operations, functions, and processes described in more detail herein. In this regard, the memory 304 may represent one suitable implementation of such computer-readable media. Alternatively or additionally, the hardware platform 300 could receive and cooperate with computer-readable media (not separately shown) that is realized as a portable or mobile component or platform, e.g., a portable hard drive, a USB flash drive, an optical disc, or the like.

The data storage apparatus 306 can be realized with the memory 304, or it can be implemented as a physically distinct component. The data storage apparatus 306 employs a nonvolatile storage technology to save and maintain data as needed. For example, the data storage apparatus 306 can include flash memory and/or a hard disk formatted to save data that is generated and used by the system 100. In certain embodiments, the data storage apparatus 306 is used to save and store pilot performance scores for a plurality of different pilots. The data storage apparatus 306 can also be used to save and maintain pilot performance records that are associated with the different pilots monitored by the system 100.

The device-specifc hardware, software, firmware, and features 308 may vary from one embodiment of the hardware platform 300 to another. For example, the device-specific hardware, software, firmware, and features 308 will support telephone functions and features when the hardware platform 300 is realized as a mobile telephone, conventional personal computer functions and features if hardware platform 300 is realized as a laptop or tablet computer, etc. In practice, certain portions or aspects of the device-specific hardware, software, firmware, and features 308 may be implemented in one or more of the other blocks depicted in FIG. 3.

The user interface 310 may include or cooperate with various features to allow a user to interact with the hardware platform 300. Accordingly, the user interface 310 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the hardware platform 300. The user interface 310 may include one or more graphical user interface (GUI) control elements that enable a user to manipulate or otherwise interact with an application via the display element 314.

The communication module 312 facilitates data communication between the hardware platform 300 and other components as needed during the operation of the hardware platform 300. Referring again to FIG. 1, the communication module 312 (of the database system 102) enables the database system 102 to communicate with the avionics network 106 and the electronic device 104 as needed. Similarly, the communication module 312 (of the electronic device 1040 enables the electronic device 104 to communicate with the database system 102 as needed. In practice, an embodiment of the hardware platform 300 may support wireless data communication and/or wired data communication, using various data communication protocols. For example, the communication module 312 could support one or more wireless data communication protocols, techniques, or methodologies, including, without limitation: RF; IrDA (infrared); Bluetooth; ZigBee (and other variants of the IEEE 802.15 protocol); IEEE 802.11 (any variation); IEEE 802.16 (WiMAX or any other variation); Direct Sequence Spread Spectrum; Frequency Hopping Spread Spectrum; cellular/wireless/cordless telecommunication protocols; wireless home network communication protocols; paging network protocols; magnetic induction; satellite data communication protocols; wireless hospital or health care facility network protocols such as those operating in the WMTS bands; GPRS; and proprietary wireless data communication protocols such as variants of Wireless USB. Moreover, the communication module 312 could support one or more wired/cabled data communication protocols, including, without limitation: Ethernet; home network communication protocols; USB; IEEE 1394 (Firewire); hospital network communication protocols; and proprietary data communication protocols.

The display element 314 is suitably configured to enable the hardware platform 300 to render and display various screens, GUIs, GUI control elements, drop down menus, auto-fill fields, text entry fields, message fields, or the like. Of course, the display element 314 may also be utilized for the display of other information during the operation of the hardware platform 300, as is well understood. Notably, the specific configuration, operating characteristics, size, resolution, and functionality of the display element 314 can vary depending upon the practical implementation of the hardware platform 300. For example, if the hardware platform 300 is a laptop computer, then the display element 314 may be a relatively large monitor. Alternatively, if the hardware platform 300 is a cellular telephone device, then the display element 314 may be a relatively small integrated display screen, which may be realized as a touch screen.

It should be appreciated that the database system 102 and the electronic device 104 (see FIG. 1) may be implemented in a manner that is fundamentally consistent with that described here with reference to FIG. 3. Accordingly, those familiar with computer-based devices and system architectures will understand how the above description of the hardware platform 300 can also apply in an equivalent manner to the database system 102 and the electronic device 104.

The system 100 described here can be utilized to monitor, score, and evaluate the performance of any number of pilots. In this regard, the system 100 can collect and analyze the avionics data that is produced during operation of the aircraft under the control of the monitored pilots. In certain embodiments, the system 100 employs a cloud-based centralized database system 102 that receives and processes avionics data after completion of each monitored flight. The avionics data can be collected during each flight for uploading at any convenient time following completion of the flight. Alternatively, the avionics data can be communicated in real-time, in virtually real-time, or in a delayed manner during the flight.

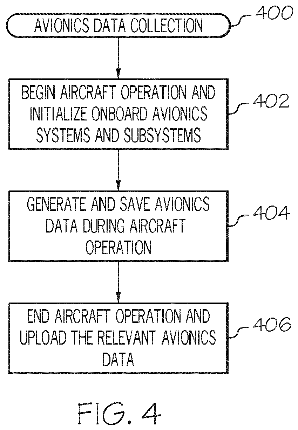

FIG. 4 is a flow chart that illustrates an exemplary embodiment of an avionics data collection process 400, which can be performed by an embodiment of the system 100. The various tasks performed in connection with a process described herein may be performed by software, hardware, firmware, or any combination thereof. It should be appreciated that an illustrated and described process may include any number of additional or alternative tasks, the tasks shown in the figures need not be performed in the illustrated order, and that an illustrated process may be incorporated into a more comprehensive procedure or process having additional functionality not described in detail herein. Moreover, one or more of the tasks shown in a figure could be omitted from an embodiment of the respective process as long as the intended overall functionality remains intact.

The avionics data collection process 400 can be performed whenever the host aircraft is operated. Thus, the process 400 initializes the onboard avionics systems and subsystems when aircraft operation begins (task 402). Task 402 prepares the various onboard systems, including the avionics network 106, for avionics data generation and collection. The process 400 continues by generating and saving the relevant avionics data during the operation of the aircraft (task 404). In practice, the host aircraft can generate a vast amount of avionics data in an ongoing manner, but all of the generated avionics data need not be used for purposes of pilot scoring and evaluation. Consequently, the process 400 can be performed such that only some of the available avionics data is saved for use in calculating pilot scores. The onboard avionics systems and subsystems function in a conventional manner to create the respective avionics data while the aircraft is operating. Eventually, aircraft operation ends and the relevant avionics data is uploaded or otherwise communicated for further processing and analysis in the manner described in more detail below (task 406). In certain embodiments, the collected avionics data is uploaded to the database system 102 after the aircraft lands, taxis, and reaches its stationary destination. It should be appreciated that the gathered avionics data can be analyzed at any convenient time and, therefore, the uploading/communicating of the avionics data might be delayed for a time period after completion of the flight. It should be understood that an instantiation of the avionics data collection process 400 is performed for each flight of interest such that historical avionics data can be processed, and analyzed on demand.

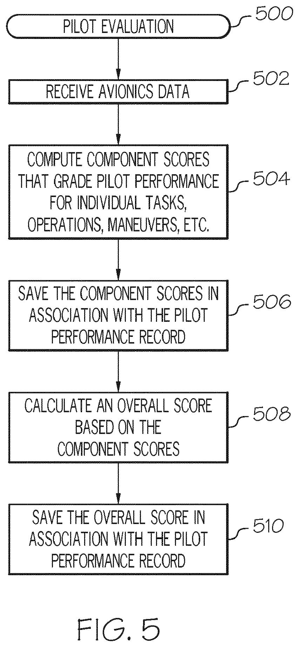

FIG. 5 is a flow chart that illustrates an exemplary embodiment of a pilot evaluation process 500, which may be performed by the system 100 described herein. It should be understood that an instantiation of the process 500 is performed for each flight of interest to calculate pilot performance scores for each flight. In certain exemplary embodiments, the process 500 is performed by a centralized system, such as the cloud-based database system 102 (see FIG. 1).

The process 500 receives avionics data (task 502) that is generated by a plurality of avionics systems onboard the host aircraft, wherein the avionics data is generated during operation of the aircraft by the pilot being evaluated. The avionics data is typically received after completion of the flight, for data that is collected onboard the host aircraft during the flight, during pre-flight operations, and during post-landing operations. At least some of the received avionics data is analyzed and processed to compute a plurality of component scores for the pilot (task 504). Thus, each component score is based on some of the received avionics data. Each component score represents or otherwise indicates a performance grade, rating, or ranking for a corresponding pilot-controlled, pilot-commanded, or pilot-influenced operation of the aircraft. In this context, each component score can be linked to an individual pilot task, aircraft operation, aircraft maneuver, requirement, or the like, and a given flight can have any number of component scores associated therewith.

A component score can be related to any predefined phase, segment, or portion of a flight plan (e.g., a takeoff procedure, a landing procedure, or an altitude change procedure). Alternatively or additionally, a component score can be related to factors, parameters, or conditions that can be derived from or are otherwise influenced by pilot actions. In accordance with certain exemplary embodiments, a component score may include, without limitation: a fuel efficiency score; a takeoff operation score; a landing operation score; a navigation accuracy score; a braking efficiency score; an energy management score; or an automation management score. A component score can be calculated or derived using any suitable algorithm, formula, or methodology. In certain scenarios, a component score is computed from avionics data generated by only one of the onboard avionics systems. Alternatively, (depending on the embodiment and particular application of the system 100), a component score can be computed from avionics data generated by at least two of the avionics systems onboard the host aircraft.

A component score can be generated by a plurality of different data values, measurements, indicators, or the like. For example, a given component score can be calculated from: GPS data collected at a specified time or during a period of time; time stamp data; and aircraft attitude data. As another example, another component score can be calculated from: brake sensor data; aircraft speed data; and aircraft touchdown information. In this regard, a particular component score can be generated from any number of variables if so desired.

### Example: Navigation Performance

The pilot's navigation performance can be the basis of a component score. In this context, there will usually be an optimized navigation path for the flight plan. The system 100 can determine whether or not the pilot deviated from the preferred navigation route (using lateral deviation measurements, altitude measurements, GPS data, flight plan data, and the like). The calculation of a navigation performance score can also consider variation in pitch angle and heading, along with data that indicates how often navigation changes were made by the pilot. The navigation performance score will indicate a measure of efficiency of the actual flight path, relative to the preferred navigation route.

### Example: Landing Proficiency

The landing procedure can be the basis of another component score. The landing procedure score indicates whether or not the landing of the aircraft was accurate, smooth, and effective. The landing procedure score can be calculated from GPS data, runway data (e.g., the location of the runway threshold, the centerline of the runway, etc.), sensors that measure the weight on the aircraft wheels (to detect touchdown), and the like. In practice, the landing proficiency score can consider the distance from the centerline of the runway at touchdown, the distance from the runway threshold at touchdown, whether the landing was smooth or rough, and other factors related to the landing procedure.

The process 500 continues by saving the component scores in association with a pilot performance record for the pilot being evaluated (task 506). The pilot performance record can be maintained over time to enable trending analyses, statistical analysis of historical scores, and the like. Moreover, the saved component scores can be further processed or analyzed as needed to generate user reports, charts, graphs, etc.

The exemplary embodiment described here continues by calculating an overall score for the pilot (task 508). The overall score represents a flight performance grade, rating, or ranking of the entire flight operation (rather than any individual portion or phase of the flight). The overall score is calculated from the component scores using an appropriate algorithm, formula, or methodology, which may vary from one embodiment to another and from one application to another. For example, the overall score could be calculated as the mean or median value of the component scores. As another example, the overall score could be generated by weighting the component scores in a particular manner. As yet another example, the overall score could be represented as a simple or weighted sum of the individual component scores. The overall score can be expressed using a universal or globally recognized scale or range to make the scores for different pilots easy to compare and interpret.

The process 500 continues by saving the overall score in association with the pilot performance record for the pilot being evaluated (task 510). The overall score can be stored and maintained indefinitely to enable trending analyses, statistical analysis of historical scores, and the like. Moreover, the saved overall score can be further processed or analyzed as needed to generate user reports, charts, graphs, etc.

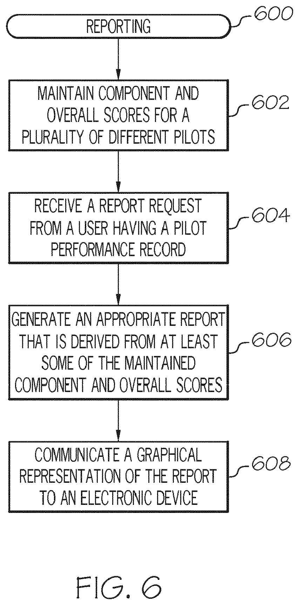

FIG. 6 is a flow chart that illustrates an exemplary embodiment of a reporting process 600, which can be performed by the system 100 on demand. This description assumes that the centralized database system 102 performs the process 600. As explained above, the system 100 maintains historical component scores and historical overall scores for different pilots and for different flights (task 602). In certain implementations, the system 100 maintains a pilot performance record for each registered pilot, such that authorized users can view reports, charts, graphs, and/or other output formats that indicate the pilot performance scores. This example assumes that the process 600 receives a report request from an authorized user of the system 100, where the request calls for a stored pilot performance record that is maintained by the database system 102 (task 604). In response to the request, the process 600 generates a suitably formatted report that is derived from at least some of the maintained component scores and/or from at least some of the maintained overall scores (task 606).

The content of the generated report, its arrangement and format, and the manner in which it is conveyed is determined at least in part by instructions contained in the request. For example, the report may include the most recent set of scores for the pilot, or it may include historical scores for older flights. As another example, a user can request a report that contains comparative pilot performance scores for any number of different pilots. The exemplary embodiment described here generates and communicates a graphical representation of the requested report to an electronic device (a computer device, a mobile device, equipment onboard the aircraft, or the like) for presentation on the electronic device (task 608). In accordance with some embodiments, task 608 provides the graphical representation of the report to a mobile application running on the electronic device. As another example, task 608 provides the graphical representation of the report to a web browser application running on the electronic device. In this regard, the report can be formatted as an HTML document for display in a web page format.

The system described above can be an effective tool for capturing and analyzing pilot response data, situational data, and avionics data to evaluate and improve pilot performance, operational efficiency, and training efficiency. The avionics data can be analyzed in an appropriate way to score and rank pilots, and to find meaningful usage patterns. The pilot performance scores facilitate a "gaming" mentality and competition among pilots to improve themselves. In addition, the system can be utilized to reveal performance details, inefficiencies, and deviations, which in turn can be addressed to improve pilot scores. Users of the system include, without limitation, individual pilots, equipment manufacturers, airline companies, regulatory agencies, and the like. Client device applications, such as mobile applications and web browser interfaces, can be supported to make the pilot scores readily available on demand.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method of evaluating pilot performance, the method comprising:
receiving, at a database system, avionics data generated by a plurality of avionics systems onboard an aircraft during operation of the aircraft by a pilot;
computing, by the database system, a plurality of component scores for the pilot based on the received avionics data, each of the plurality of component scores representing a performance grade for a pilot-controlled operation of the aircraft;
saving, by the database system, the plurality of component scores in association with a pilot performance record for the pilot;
calculating, by the database system, an overall score based on the plurality of component scores, the overall score representing a flight performance grade for the pilot;
saving, by the database system, the overall score in association with the pilot performance record for the pilot;
generating, by the database system in response to a user request, a report derived from the plurality of component scores and the overall score; and
communicating a graphical representation of the report to an electronic device.

2. The method of claim 1, wherein the receiving is performed after completion of a flight, and for avionics data collected onboard the aircraft during the flight.

3. The method of claim 1, wherein the receiving is performed during a flight for avionics data collected onboard the aircraft during the flight.

4. The method of claim 1, wherein at least one of the plurality of component scores is computed from avionics data generated by at least two of the avionics systems.

5. The method of claim 1, wherein the avionics data received comprises data generated in response to pilot interaction with at least one of the avionics systems.

6. The method of claim 1, wherein the communicating provides the graphical representation of the report to at least one of:
a mobile application of the electronic device; and
a web browser application of the electronic device in a web page format.

7. The method of claim 1, further comprising maintaining, by the database system, historical component scores and historical overall scores for the pilot.

8. The method of claim 1, further comprising maintaining, by the database system, component scores and overall scores for a plurality of different pilots.

9. The method of claim 1, wherein a component score of the plurality of component scores comprises:
a fuel efficiency score;
a takeoff operation score;
a landing operation score;
a navigation accuracy score;
a braking efficiency score;
an energy management score; or
an automation management score.

10. The method of claim 1, wherein the received avionics data comprises global positioning system data, aircraft speed data, aircraft elevation data, aircraft altitude data, time data, fuel consumption data, aircraft acceleration data, aircraft deceleration data, gravitational loading data, aircraft route data, airport identifier data, runway identifier data, aircraft glide slope deviation data, aircraft lateral deviation data, aircraft vertical deviation data, wind speed data, approach type data, aircraft heading data, aircraft pitch angle data, aircraft braking force data, aircraft pitch rate data, aircraft roll rate data, aircraft yaw rate data, or autopilot mode data.

11. A computer-implemented system comprising:
a processor architecture comprising at least one processor device;
a data storage apparatus; and
a tangible computer readable media element comprising non-transitory processor-executable instructions stored thereon and configurable to cause the processor architecture to perform a method of evaluating pilot performance, the method comprising:
receiving avionics data generated by a plurality of avionics systems onboard an aircraft during operation of the aircraft by a pilot;
computing a plurality of component scores for the pilot based on the received avionics data, each of the plurality of component scores representing a performance grade for a pilot-controlled operation of the aircraft;
saving, in the data storage apparatus, the plurality of component scores in association with a pilot performance record for the pilot;
calculating an overall score based on the plurality of component scores, the overall score representing a flight performance grade for the pilot;
saving, in the data storage apparatus, the overall score in association with the pilot performance record for the pilot;
generating, in response to a user request, a report derived from the plurality of component scores and the overall score; and
communicating a graphical representation of the report to an electronic device.

12. The system of claim 11, wherein the receiving is performed during or after completion of a flight, and for avionics data collected onboard the aircraft during the flight.

13. The system of claim 11, wherein at least one of the plurality of component scores is computed from avionics data generated by at least two of the avionics systems.

14. The system of claim 11, wherein the avionics data received comprises data generated in response to pilot interaction with at least one of the avionics systems.

15. The system of claim 11, wherein the method configurable by the processor-executable instructions further comprises:
